Europäisches Patentamt

European Patent Office

Office européen des brevets

(11) Publication number: **0 361 552**
**A1**

## EUROPEAN PATENT APPLICATION

(21) Application number: **89202011.6**

(22) Date of filing: **01.08.89**

(51) Int. Cl.5 **A62D 3/00** , **B09B 3/00**

The title of the invention has been amended (Guidelines for Examination in the EPO, A-III, 7.3).

(30) Priority: **07.09.88 IT 6779588**

(43) Date of publication of application:
**04.04.90 Bulletin 90/14**

(84) Designated Contracting States:
**AT BE CH DE ES FR GB GR LI LU NL SE**

(71) Applicant: **TECNOCOLOR S.a.s di
CELEBRANO A. & C.
Via Settimo, 224
I-10040 Leini (Turin)(IT)**

(72) Inventor: **Bertolino, Giorgio
Via Settimo, 224
I-Leini Turin(IT)**

(74) Representative: **de Blasio, Francesco,
Dipl.-Ing.
Cabinet SIMONI DE BLASIO Via XX
Settembre, 62
I-10121 Torino(IT)**

(54) **Process for solidifying, stabilising and making toxic, noxious waste inert by encasement in resin.**

(57) In the treatment acccrding to the invention, toxic-obnoxious waste is crushed and mixed to thermo-plastic resins; the mixture is melted and then cooled to obtain solid cakes. The toxic-obnoxious waste is permanently encased in and retained by the plastic and can easily be stored or disposed of in dumps with no danger of leakage of contaminated substances.

EP 0 361 552 A1

# System for solidification, inertization and stabilization treatment of toxic-obnoxious waste by means of encasement in resin

DESCRIPTION:

Toxic-obnoxious waste made up of paints, phenols, galvanic muds, oils, pesticides, chemical residues, hospital rejects, dry cleaning muds and many other poisonous products cause big problems as regards their correct disposal and elimination. The most widely used systems are:

a) incineration in special ovens, which is a very costly procedure;

b) permanent storage in drums or containers, which besides being a costly process also involves the possibility that the containers may open with the result that the products leak;

c) recovery and recycling, with costs nearly always exceeding the return;

d) controlled dumping in waterproof tanks. There is always the possibility that the tanks may crack resulting in the risk of leakage and contamination.

It should be noted that above all, toxic-obnoxious waste that has already undergone partial recovery treatment for the extraction of products to be salvaged, are sent to controlled dumps. The object of the invention is a procedure by which toxic-obnoxious waste is permanently encased in resin in the solid state and then inertized and stabilized.

The following experiments have been carried out:

Experiment No. 1 - 20 Kg of galvanic muds in blocks containing 20% of water have been treated as follows: - crushing in a turbo until pulverization is completed;
- addition of 20 Kg of RSU origin thermoplastic resins, finely crushed, made up of 80% of polyethylene and 20% of other resins and paper;
- addition of synthetic lubricant;
- blending;
- vacuum melting and homogenization in plastic materials extruder with degassing, elimination of the water and production of a hot paste;
- intrusion of the hot paste in a die;
- cooling;
- extraction of solid brick-shaped forms.

Experient No. 2 - 20 Kg of dry cleaning muds in blocks containing 16-17% of trichloroethylene have been treated as follows:
- crushing in a turbo until pulverization is completed;
- addition of 20 Kg of plastic materials, finely mixed and crushed, RSU origin, made up of 80% of polyethylene and the remaining 20% of mixed resins and paper;
- addition of lubricant;
- blending;
- vacuum melting and homogenization in plastic materials extruder with degassing;
- continuous recovery of the trichloroethylene by means of distillation;
- production of a melted paste;
- insertion of the melted paste into a brick-shaped die;
- cooling;
- extraction of solid pieces.

Experiment No. 3 - 24 Kg of heterogeneous toxic waste made up of plastic cans, plastic bags, plastic bottles and paper sacks (previously containing pesticides, weed-killers and aniline dyes) have been treated as follows:
- vacuum chopping and fine crushing of the entire batch;
- addition of 30 Kg of crushed, reclaimed, RSU origin polyethylene;
- addition of synthetic lubricant;
- total mixing;
- vacuum melting in plastic materials extruder;
- intrusion;
- cooling in a special rectangular, brick-shaped die;
- extraction of the solid pieces.

Experiment No. 4 - 120 Kg of various types of paint of unknown origin, synthetic, nitre, epoxide, tar, polyester etc. based, in part solid and in part semi-liquid have been treated in the following way:
- slow chopping and crushing of all the products together, containers included (i.e. the tin and plastic containers were also crushed) reducing them to disks having a diameter less than 4 mm;
- this sticky paste was processed in a turbomixer with the addition of 30% of $CACO_3$ so as to obtain dry balls;
- addition of 50% of crushed polyethylene;
- vacuum melting in plastic materials extruder;
- degassing vacuum suction with immediate distillation and recovery of solvents (mixed, subsequently to be sent on to be refined);
- intrusion of the melted past in a special die;
- cooling;
- extraction of the solid brick-shaped forms.

Experiment. No. 5 - 3 Kg of transformer oil containing 17% PCB was to be inertized, proceeding as follows:
- 3 KG of oil + 20 Kg of $CACO_3$ having a 5-10 micron fineness, were spun in a high speed turbomixer for 6 minutes until the oil was completely absorbed and a temperature of 65° was reached;
- 25 Kg of powdered polyethylene were added and mixed;

- vacuum extrusion at 140°C;
- intrusion in a die;
- cooling;
- extraction of rectangular cakes.

Experiment No. 6 - 11 Kg of hospital rejects made up of gauze, needles, phleboclysis tubes and packets, plasters, syringes, paper napkins, out-of-date medicines, pills in glass bottles, tubes of cream, cotton-wool soaked in disinfectant, rubber gloves and other articles were treated as follows:
- total crushing reducing in size to at least 4mm diameter;
- addition of 3 Kg of $CACO_3$;
- addition of synthetic lubricant;
- treatment in a turbomixer for 4 minutes;
- addition of 15 Kg of finely crushed polyethylene recuperated from RSU;
- blending;
- vacuum extrusion at 160°C;
- intrusion in a die;
- cooling;
- extraction of rectangular cakes.

CONCLUSIONS:

The possibility to transform toxic-obnoxious waste by soidification and stabilization in cakes or brick-shaped forms of polyethylene undoubtedly offers many advantages in that there is no danger of leakage of contaminating agents or deterioration of the containers, providing greater safey for disposal in dumps and/or for storage.

It is possible to produce two kinds of polyethylene cakes of toxic-obnoxious waste: the first, for example, containing heavy metal scrap, will be sent to final disposal and buried while a second type, containing for example, hospital rejects, can be stored for future re-use as fuel for incinerators.

The experiments described are only some of the many possibilities that this system offers. It is certainly possible to say that any type of toxic-obnoxious waste or scrap, even radioactive, be it solid or liquid, can be treated with this system of inertization.

It is not, however, possible to generalize. Each product is a case in itself and all the risks and problems connected with crushing and hot working processes should be carefully evaluated; the suitability and compatibility of the resin with the polluting agent should be controlled, and the unalterability of the cakes with time and leakage of the substances encased in the cakes should be ascertained.

For the thermoplastic tests, polyethylene was preferably used as a binder as it is extremely stable and inert to a very large range of products, even very corrosive products and because a large amount of this resin is to be found in solid urban waste; however, for reasons of quality, any other type of resin can be used subject to ascertaining their compatibility with the products to be bound.

## Claims

1. System for the inertization, solidification and stabilization treatment of toxic-obnoxious waste by encasement in thermoplastic resin, characterized by the following phases:

a) crushing and/or pulverizing;

b) homogenization mix;

c) addition of additives, lubricants and or extenders;

d) addition of polythene in a percentage-weight of 40-50% or more as a total binder;

e) blending;

f) melting in the plastic materials extruder;

g) formation of solid pieces by means of casting, moulding, extrusion, intrusion.

2. System for treatment according to Claim 1, characterized by the fact that the toxic-obnoxious waste to be treated is made up of liquids, solids or paste or is in any other physical form.

3. System for treatment according to Claim 1, characterized by the fact that the thermoplastic resins used are of any type, used singly or mixed together.

4. System for treatment according to Claim 1, characterized by the fact that the resin or resins used are of any non-thermoplastic type and do not require hot melting.

5. System for treatment according to Claim 1, characterized by the fact that the melted mass is cast or intruded into metal drums or containers of any other type or kind suitable for increased protection from any possibility of leakage and/or pollution or for any other reason.

6. System for treatment according to Claim 1, characterized by the fact that the formulation and working processes are carried out both for final disposal or for storage and future re-use.

7. System for treatment according to Claim 1, characterized by the fact that the working process is carried out also for the recovery of products to be reused.

8. System for treatment according to Claim 1, characterized by the fact that melting is not carried out in a plastic materials extruder but by any other system.

9. System for treatment according to Claim 1, characterized by the fact that the characteristic treatment phases are not carried out integrally, or other phases not expressly described herein are carried out, the final result of solidification/stabilisation of the toxic-obnoxious waste in resin always being obtained.

10. System for solidification, inertization and stabilization treatment of toxic-obnoxious waste by encasement in resin, according to the preceding claims, as described and for the purposes specified.

European Patent Office

# PARTIAL EUROPEAN SEARCH REPORT

which under Rule 45 of the European Patent Convention shall be considered, for the purposes of subsequent proceedings, as the European search report

Application number

EP 89 20 2011

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 171 638 (J.G.C. CORP. JAPAN) <br><br> * Page 2, line 42 - page 3, line 20; examples 1,5,9,10; claims * <br><br> -- | 1-3, 5,6,9, 10 | A 62 D 3/00 <br> B 09 B 3/00 |
| X | DE-A-3 528 346 (R. LANGEN) <br><br> * Whole document * <br><br> -- | 1-3, 5-10 | |
| A | DE-A-3 529 264 (ANPROK GmbH) <br><br> * Whole document * <br><br> ----- | 1-3, 5-10 | TECHNICAL FIELDS SEARCHED (Int. Cl.4) <br><br> A 62 D <br> B 09 B |

## INCOMPLETE SEARCH

The Search Division considers that the present European patent application does not comply with the provisions of the European Patent Convention to such an extent that it is not possible to carry out a meaningful search into the state of the art on the basis of some of the claims.

Claims searched completely: 1-3,5-10
Claims searched incompletely:
Claims not searched: 4
Reason for the limitation of the search:

Claim 4 is a complete contradiction of claim 1. Claim 1 refers to "thermoplastic resin" (1.3), "polythene" (1.9) and "melting in the plastic materials extruder" (1. 12). No other resin or means of solidifying the waste apart from by melting is indicated.

| Place of search | Date of completion of the search | Examiner |
|---|---|---|
| The Hague | 21-12-1989 | FLETCHER |